# EUROPEAN PATENT APPLICATION

(11) **EP 4 556 846 A1**
(43) Date of publication of application: **21.05.2025**
(21) Application number: 23210315.0
(22) Date of filing: 16.11.2023
(51) Int. Cl.: G01B 21/24, G01B 21/04, G01B 5/252, G01B 11/26, B21J 15/14, B21J 15/28

(54) **MEASURING AND COMPENSATING TOLERANCES AT FASTENING SITES**

(71) Applicant: Airbus Operations GmbH, 21129 Hamburg (DE)
(72) Inventor: Werthmann, Christopher, Victor, 21129 Hamburg (DE); Benthien, Hermann, 21129 Hamburg (DE); Wunderlich, Alexander, 21129 Hamburg (DE)

(57) **Abstract**

In order to provide for a faster, easier and more reliable and precise way to compensate for tolerances at fastening sites between components, a measuring device is provided that comprises an alignment unit (16), a measuring unit (18) and an output (20). The alignment unit is configured to hold the measuring unit in a temporarily fixed detecting position (22) in relation to the component. The measuring unit is configured to detect a geometrical relation (26) between a through hole (28) of the component overlayed to a hole (30) of the support structure, both forming a fastening site (32). The output is configured to output the geometrical relation as a target value for adjusting at least one excentre element of an excentre-based compensator configured for insertion into the through hole of the component and for receiving a fixation element for fastening the component to the support structure.

## Description

### FIELD OF THE INVENTION

The present invention relates to a way in compensating for tolerances at fastening sites, more precisely the present invention relates to a measuring device, an excentre-orienting device, a system for adjusting an excentre-based compensator and a method for measuring a fastening site.

### BACKGROUND OF THE INVENTION

Components in a vehicle, like an aircraft, may be interconnected through a fastening structure at a fastening site. For example, monuments like galleys or lavatories are attached to a cabin floor support structure throughout the cabin space at various locations. In order to provide support of the components in the aircraft suitable for withstanding forces that may occur during flight operation of the aircraft, a form-fitting contact between the fastening site and the fastening structure may be provided. This form-fitting contact may however be affected by constructional tolerances of the support structure and the components themselves. Compensation elements may thus be provided between the component and the fastening structure at the fastening site. However, it has been shown that installation of these compensation elements at the fastening site may pose a cumbersome task.

### SUMMARY OF THE INVENTION

There may thus be a need for an improved way to compensate for tolerances at fastening sites between components.

The object of the present invention is solved by the subject-matter of the independent claims; further embodiments are incorporated in the dependent claims. It should be noted that the following described aspects of the invention apply also for the measuring device, for the excentre-orienting device, for the system for adjusting an excentre-based compensator and for the method for measuring the fastening site.

According to the present invention, a measuring device for fastening a component to a support structure is provided. The measuring device comprises an alignment unit, a measuring unit and an output. The alignment unit is configured to hold the measuring unit in a temporarily fixed detecting position in relation to the component. The measuring unit is configured to detect a geometrical relation between a through hole of the component overlayed to a hole of the support structure, both forming a fastening site. The output is configured to output the geometrical relation as a target value for adjusting at least one excentre element of an excentre-based compensator configured for insertion into the through hole of the component and for receiving a fixation element for fastening the component to the support structure.

As an advantage, assembly time of mounting a component to a support structure is reduced. As a further advantage, a higher number of attachment sites, i.e., fastening sites per compartment, is enabled. As an advantage, larger tolerances between holes at a support structure and through holes at a component can be overcome. As an advantage, reduction of parasitic loads between a component and the support structure is greatly improved. A faster, easier and more reliable and precise way of mounting components is achieved.

According to an example, the measuring unit is configured for detecting the fastening site by mechanical sensing.

According to an example, for the mechanical sensing, the measuring unit comprises a probing rod with a probe head. The probe head is configured to enter the through hole and the hole. The probe head is configured for mechanical sensing of locations on inner surfaces at the fastening site.

According to an example, the probing rod is configured to act on an indicator of a mechanical scale during the mechanical detection to indicate a value on the scale, which value is representative of the geometrical relation.

According to an example, the measuring unit is configured for detecting the fastening site via electromagnetic detection.

According to an example, for the electromagnetic detection, the measuring unit comprises a sensor for detecting electromagnetic waves.

According to the present invention, also an excentre-orienting device for adjusting an excentre-based compensator is provided. The excentre-orienting device comprises a value display and an excentre-receiving unit. The excentre-receiving unit is configured to rotatively hold the excentre-based compensator. The value display is configured to indicate a current rotative adjustment value of the excentre-based compensator inserted into the excentre-receiving unit.

According to the present invention, also a system for adjusting an excentre-based compensator at a fastening site is provided. The system comprises a measuring device according to one of the previous examples and an excentre-orienting device according to one of the previous examples. The measuring device is connected to the excentre-orienting device to transfer a measured value to the excentre-orienting device.

As an advantage, the adjustment time of an excentre-based compensator bushing is reduced.

As an advantage, the process of fastening a component to a support structure is accelerated.

As an advantage, a more precise adjustment and tuning of the excentre-based compensator results.

As an advantage, a higher number of dimension requirements at the fastening site to fulfill during the installation, with respect to the trolley door, and the lining panels can be taken into account.

As an advantage, more protected fastening sites between a component and a support structure with a lower visibility and accessibility are enabled.

According to the present invention, also a method for measuring a fastening site of a component to a support structure is provided. The method comprises the following steps:
- Positioning the component on the support structure such that a through hole of the component overlays a hole of the support structure,
- Holding a measuring unit in a temporarily fixed detecting position,
- Detecting a geometrical relation between the through hole and the hole, and
- Outputting the geometrical relation as a target value for adjusting at least one excentre element of an excentre-based compensator.

As an advantage, the mounting time of fastening a component to a support structure is reduced.

According to an aspect, a measuring instrument for mounting areas with a complex geometrical shape is provided. The complex geometrical shape results from tolerances and deviations between the components forming the mounting area. The instrument is configured to capture the complex geometrical shape and translate this into a meaningful value for a compensation support provided by a fitting, e.g., an insert. The compensation support equalizes the tolerances and deviations when being installed at the mounting area according to the meaningful value. The installed compensation support thereby reduces the complexity of the complex geometrical shape at the mounting area and enables a more form-fit connection at the mounting area with an interconnecting structure.

According to an aspect, a relative position of a mounting bore and an insert recess is determined and a respective value for a compensation insert is provided. As an example, a double excentre is provided for compensating tolerances and the captured relative position is used for determining the rotation setting values for the double excentre.

According to an aspect, measuring and compensating tolerances at fastening sites is provided for achieving a facilitated and less tedious mounting procedure.

These and other aspects of the present invention will become apparent from and be elucidated with reference to the embodiments described hereinafter.

### BRIEF DESCRIPTION OF THE DRAWINGS

Exemplary embodiments of the invention will be described in the following with reference to the following drawings:
Fig. 1 schematically shows a general scheme of an example of a measuring device aligned at a fastening area.
Fig. 2 schematically shows a general scheme of an example of a measuring device for mechanical sensing.
Fig. 3 schematically shows a general scheme of an example of a measuring device for electromagnetic detection.
Fig. 4 schematically shows a general scheme of an example of an excentre-orienting device for adjusting an excentre-based compensator.
Fig. 5 schematically shows a general scheme of an example of a system for adjusting an excentre-based compensator .
Fig. 6 schematically shows a general scheme of another example of a system for adjusting an excentre-based compensator.
Fig. 7 shows basic steps of an example of a method for measuring a fastening site of a component to a support structure.

### DETAILED DESCRIPTION OF EMBODIMENTS

Certain embodiments will now be described in greater details with reference to the accompanying drawings. In the following description, like drawing reference numerals are used for like elements, even in different drawings. The matters defined in the description, such as detailed construction and elements, are provided to assist in a comprehensive understanding of the exemplary embodiments. Also, well-known functions or constructions are not described in detail since they would obscure the embodiments with unnecessary detail. Moreover, expressions such as "at least one of', when preceding a list of elements, modify the entire list of elements and do not modify the individual elements of the list.

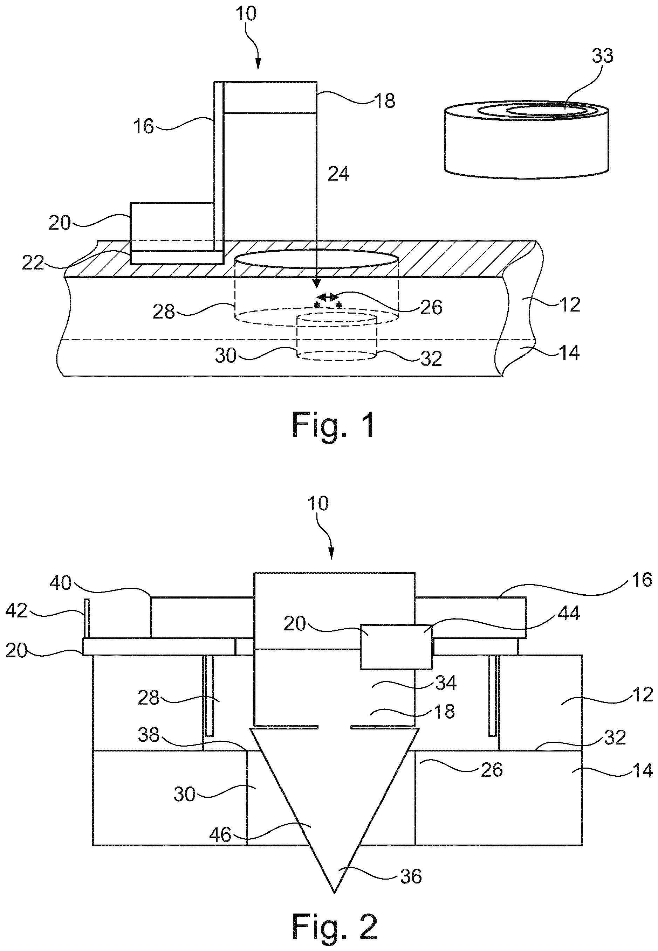

Fig. 1 schematically shows a general scheme of an example of a measuring device aligned at a fastening area. The measuring device 10 for fastening a component 12 to a support structure 14, comprises an alignment unit 16, a measuring unit 18 and an output 20. The alignment unit 16 is configured to hold the measuring unit 18 in a temporarily fixed detecting position 22 in relation to the component 12. The measuring unit 18 is configured to detect, as shown by arrow 24 in Fig. 1, a geometrical relation 26 between a through hole 28 of the component 12 overlayed to a hole 30 of the support structure 14, both forming a fastening site 32. The output 20 is configured to output the geometrical relation 26 as a target value for adjusting at least one excentre element of an excentre-based compensator 33, that is shown on the right-hand side of Fig. 1, configured for insertion into the through hole 28 of the component 12 and for receiving a fixation element, not shown in Fig. 1, for fastening the component 12 to the support structure 14.

The term "measuring device" relates to an instrument like, e.g., a caliper gauge used to determine the dimensions of objects in 3D space.

The term "component" relates to a compartment, a bulk structure, or a three-dimensional object that needs to be securely attached to a larger object in order to support a function of the larger object.

In an example, the larger object is a vehicle, not shown in Fig. 1.

In an example, the larger object is an aircraft, not shown in Fig. 1.

In an example, the component 12 is a part of the cabin in an aircraft, not shown in Fig. 1.

In an example, the component 12 is a compartment or a galley installation in an aircraft, not shown in Fig. 1.

In an example, the component 12 is another functional part of an aircraft, supporting its function, not shown in Fig. 1.

The term "support structure" relates to a base or a carrier that is constructed to hold the component 12.

In an example, the support structure 14 is a vehicle, like an aircraft, not shown in Fig. 1.

In an example, the support structure 14 is a primary structure of an aircraft, not shown in Fig. 1.

In an example, the primary structure is a structure of the aircraft, that is subjected to aerodynamic loads, not shown in Fig. 1.

The term "alignment unit" relates to a base station, a carrier, a holder, a stand, that is able to attain a defined spatial orientation towards an object, that is defined by the object and the alignment unit 16. The defined spatial orientation towards the object can be reproduced by the alignment unit 16 after removal of the alignment unit 16 at the object and renewed placement of the alignment unit 16 at the object. The process is also described as temporarily fixing. The alignment unit 16 is configured to impose the defined spatial orientation towards any other item, that is associated with the alignment unit 16 in Fig. 1.

The term "measuring unit" relates to an instrument that is able to capture, detect, record, or map a state of an object in space.

In an example, the recording of the measuring unit 18 of the state of an object in space is the same, independent from the number of recordings.

In an example, the association of the measuring unit 18 with the alignment ensures that the recording of the measuring unit 18, as shown in Fig. 1, of the state of an object in space is the same, independent from the number of recordings.

The term "output" relates to a unit that comprises an access to the recordings of the measuring unit 18.

In an example, the output 20 is an interface for data transfer.

In an example, the output 20 is a display, not shown in Fig. 1.

The term "temporarily fixed" relates to a state of the measuring unit 18 while recording the state of an object in space, such that the recording of the state of an object in space remains always the same during recording. In other words, the measuring unit 18 is secured against shifting during recording but can be released to be shifted or moved after recording.

The term "detecting position" relates to the absolute position of the measuring unit 18 towards the object in space to be recorded in Fig. 1.

In an example, the detecting position 22 is determined by the object in space to be recorded and transferred via the alignment unit 16 to the measuring unit 18 that is associated with the alignment unit 16 in Fig. 1.

In an example, the detecting position 22 is reproducible by the measuring unit 18 and the alignment unit 16.

The term "through hole" relates to a connection between two different faces of a component 12, such that a fixation element can be inserted and connect the two different faces.

In an example, the through hole 28 is configured for fastening of the component 12 to a support structure 14 by a fixation element, not shown in Fig. 1.

The term "hole" relates to a recess in the surface of a structure that is able to receive the fixation element and optionally configured for locking of the fixation element.

In an example, the hole 30 is a through hole 28.

In an example, the hole 30 is configured for abutment of a locking element of the fixation element.

In an example, the hole 30 is sack hole, not shown in Fig. 1.

In an example, the sack hole is configured for locking the fixation element.

In an example, the holes 30 are at predefined locations in the support structure 14.

In an example, the positions of the through holes 28 at the component 12 disagree with the corresponding positions of the holes 30 in the support structure 14, where through holes 28 and holes 30 are provided for forming a fastening site 32 of the component 12 to the support structure 14.

In an example, the through hole 28 has a larger diameter than the hole 30 to compensate for differences between the location of the through hole 28 and the hole 30, as shown in Fig. 1.

In an example, the differences are induced by the construction of the component 12 and the support structure 14 or their material properties.

In an example, the differences are induced by environmental conditions.

The term "geometrical relation" relates to the location of the centre of the through hole 28 with respect to the location of the centre of the hole 30.

In an example, the geometrical relation 26 relates to the diameters and radii of the through hole 28 and the hole 30.

In an example, the geometrical relation 26 relates to the depth of the through hole 28 and the hole 30.

In an example, the geometrical relation 26 relates to the orientation of the through hole 28 and the hole 30 in 3D space.

In an example, the diameter of the through hole 28 is larger than the hole 30 to comprise the hole 30, as shown in Fig. 1.

In an example, the through hole 28 intersects the hole 30.

In an example, differences in the position of the through hole 28 and the hole 30 are compensated by the larger diameter of the through hole 28.

The term "fastening site" relates to attachment points of the component 12 to the support structure 14 that form a friction-locking connection between the component 12 and the support structure 14 through fixation elements.

In an example, the fastening site 32 relates to the through hole 28 and the hole 30, but also to a surface of the support structure 14 reachable through the through hole 28.

The term "target value" relates to single or multiple terms that can transfer the geometrical relation 26 onto other elements that compensate structural differences between the fastening site 32 and the fixation element.

In an example, for transferring the geometrical relation 26 onto elements comprised by the fastening site 32, the detecting position 22 is associated with or part of the target value.

The term "excentre element" relates to an elongated object comprising an inner lumen or volume with a wall. The inner lumen is configured to take up a fixation element like, i.e., a bolt structure. The inner lumen is a fixation element through hole.

In an example, the excentre elements are cylindrical objects with an inner volume defined by a circular cross-section, as shown in Fig. 1.

In an example, the centre of the excentre element agrees with the centre of the inner volume of the excentre element, as shown in Fig. 1.

In an example, the centre of the excentre element deviates from the centre of the inner volume of the excentre element. In consequence, the centre of a bolt structure comprised by the inner volume will also deviate from the centre of the excentre elements, being "ex centre".

The excentre-based compensator can also be referred to as double-excentre, double excentre, double-excentre bushing, double-excentre bush, as well as excentre-based compensator bushing and excentre-based compensator bush.

The term "excentre-based compensator" relates to at least one sleeve, bushing, casing, hull, envelope, pocket, shell that is able to fill out a prefabricated recess.

In an example, the excentre-based compensator 33 comprises one excentre element only.

In an example, the excentre-based compensator 33 comprises a fixation element through hole that is configured to comprise a fixation element.

In an example, the radial cross-section of the excentre element and the excentre-based compensator 33 comprises a radius with its origin in the fixation element through hole.

In an example, the excentre-based compensator 33 comprises a combination of at least two excentre elements, as shown in Fig. 1, wherein a first excentre element is comprised by the inner volume of the second excentre element. Both excentre elements form a common fixation element through hole.

In an example, by rotating the first excentre element with respect to the second excentre element their common fixation element through hole can be shifted to a desired position at the double-excentre 33 cross-section, as shown in Fig. 1.

In an example, by choosing the diameter and the deviation of the centre of the inner lumen of the first and second excentre elements their common fixation element through hole 28 can be shifted to a desired position at the double-excentre 33 cross-section.

In an example, the diameter of the through hole 28 is larger than the hole 30, as shown in Fig. 1. The diameter of the hole 30 is configured to match the fixation element, but the through hole 28 is not, resulting in a circular gap or interspace volume between the through hole 28 and the fixation element. The double-excentre 33 is configured to fill out the gap by matching the diameter of the through hole 28 and matching the diameter of the fixation element and the hole 30 by its fixation element through hole 28. By choosing and adjusting distinct excentre elements to form a double-excentre 33, the resulting double excentre can match any geometry of the interspace between through hole 28 and the fixation element. Any geometry also relates to cases where the centre of the through hole 28 and the hole 30 deviate. In consequence a form-fit connection, not shown in Fig. 1, between the fixation element and the inner surface of the through hole 28 is achieved. This leads to a tighter fixation of the component 12 to the support structure 14 and reduces parasitic loads.

In an example and preferably, an excentre-based compensator 33 comprising at least two excentre elements is chosen for the fastening site 32.

In an example, an excentre-based compensator 33 comprising one excentre element filling out the through hole 28 is chosen. The centre of the fixation element through hole 28 of the excentre element agrees with the location of the centre of the hole 30 in the through hole 28. In cases as such, the radius of the second excentre element equals zero.

In an example, an excentre-based compensator 33 comprising one excentre element filling out the through hole 28 is chosen. The centre of the fixation element through hole of the excentre element agrees with the location of the centre of the hole 30 in the through hole 28. The location of the centre of the hole 30 in the through hole 28 is the centre of the through hole 28. The excentre element comprises its fixation element through hole in the centre of the excentre element.In an example, the centres of the through hole 28 and the hole 30 agree and have a zero offset, such that the excentre-based compensator 33 only requires a single excentre element for filling out the through hole 28 and comprising the fixation element in the hole 30 and the fixation element through hole 28. In a case as such, the radius of the second excentre element equals zero, since there is not offset between the centres of the through hole 28 and the hole 30.

The double-excentre 33 can also be referred to as double-excentre bush, double-excentre bushing, double-excentre element.

The parts of the double-excentre 33 can also be referred as first and second excentre elements.

In an example, the double-excentre 33 comprises more than two, like three or four excentre elements.The term "fixation element" relates to a rod-like structure able to generate a preload force, like, i.e., a bolt structure.

In an example, the measuring unit 18 and the alignment unit 16 are configured to record fastening sites at hardly accessible sites of the component 12 with the help of, i.e., fibre optics.

In an example, the alignment unit 16 is configured for connection to a mobile device, like i.e., a mobile phone.

In an example, the measuring device 10 is configured for connection to a mobile device, like e.g., a mobile phone.

In an example, the measuring device 10 comprises a mobile device, like, e.g., a mobile phone.

Fig. 2 schematically shows a general scheme of an example of a measuring device 10 for mechanical sensing. The measuring unit 18 of the measuring device 10 is configured for detecting the fastening site 32 by mechanical sensing.

The term "mechanical sensing" relates to detection by a contact between two objects.

In an example of Fig. 2, for the mechanical sensing, the measuring unit 18 comprises a probing rod 34 with a probe head 36. The probe head 36 is configured to enter the through hole 28 and the hole 30. The probe head 36 is configured for mechanical sensing of locations 38 on inner surfaces at the fastening site 32.

The term "probing rod" relates to a rod-like, elongated object whose interaction with other objects is reproducible.

The term "probe head" relates to an area of the probing rod 34 that is in direct contact with the object to be recorded, as shown in Fig. 2.

In an example, the probing rod 34 is configured to sense at least three locations of the through hole 28 and at least three locations of the hole 30.

In an example, the probing rod 34 is configured for contacted scanning of the through hole 28 and the hole 30 enabled by interfaces to drives and transmission gearing, not shown in Fig. 2.

In an example, the probe head 36 comprises a hard material, e.g., ruby or an aluminum oxide layer.

In an example of Fig. 2, the probing rod 34 is configured to act on an indicator 40 of a mechanical scale 42 during the mechanical detection to indicate a value on the scale, which value is representative of the geometrical relation 26.

The term "mechanical scale" relates to a unit that is configured to transfer physical distances into mathematical values.

In an example, the mechanical scale 42 thus forms the output 20, as shown in Fig. 2.

In an example, the mechanical scale 42 connects the probing rod 34 to the alignment unit 16.

In an example of Fig. 2, the probing rod 34 is configured to act on an electromechanical indicator 44 to generate an electric signal during the mechanical detection, which signal is representative of the geometrical relation 26.

In an example, the electromechanical indicator 44 thus forms the output 20, as shown in Fig. 2.

In an example, the probing rod 34 deforms during sensing and generates an electric signal.

In an example, the electric signal is generated by a drive, a linear potentiometer or a piezoelectric element, not shown in Fig. 2.

As an advantage, a faster and more precise and detailed analysis of the geometrical relation of a through hole and a hole results.

In an example of Fig. 2, the probing rod 34 comprises a self-centering stick 46 and the alignment unit 16 is configured to allow for centering of the self-centering stick 46 at the hole 30. The self-centering triggers the output of a value or signal that is representative of the geometrical relation 26.

The term "self-centering stick" relates to a rod-like object that is formed to align its mass centre of gravity with a deepening of a supporting structure and where the mass centre of gravity of the rod-like object is marked with its end distal to the deepening, as shown in Fig. 2.

In an example, the probing head is provided with a cone-shaped tip portion. The largest diameter of the cone-shaped tip portion is larger than the second through hole 28 such that the probing rod 34 centers itself in the second through hole 28 by gravity with a tapered end of the cone-shape, as shown in Fig. 2.

As an advantage, a faster and more precise determination of the geometrical relation of a through hole and a hole results.

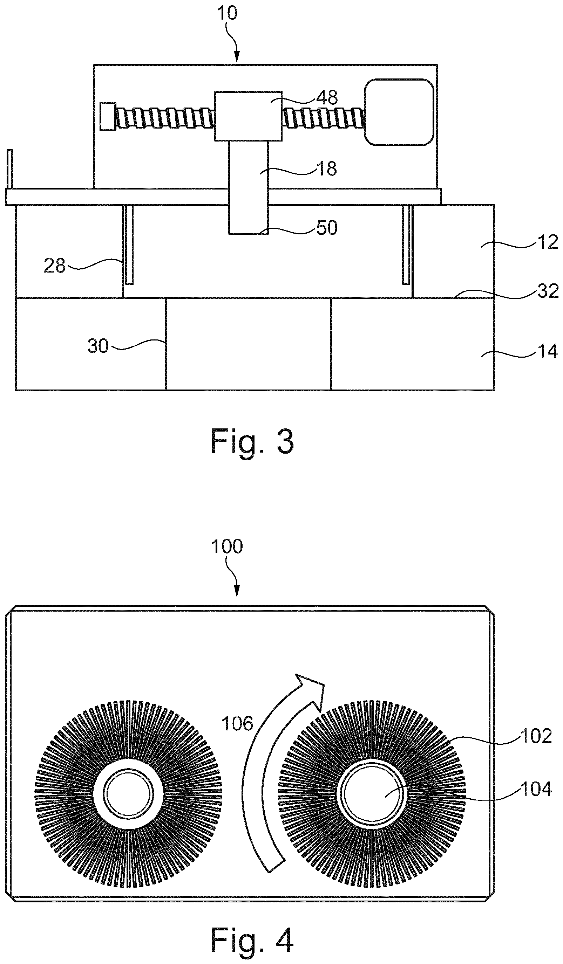

Fig. 3 schematically shows a general scheme of an example of a measuring device 10 for electromagnetic detection. The measuring unit 18 of the measuring device 10 is configured for detecting the fastening site 32 via electromagnetic detection.

As an advantage, a faster determination of the geometrical relation 26 of through hole 28 and hole 30 results.

In an example of Fig. 3, for the electromagnetic detection, the measuring unit 18 comprises a sensor 48 for detecting electromagnetic waves.

In an example, the electromagnetic wave comprises a spectrum ranging from microwave to infrared and UV/Vis light, 1 m to 0,3 mm,780 nm to 1 mm, 180 to 800 nm wavelength, respectively.

In an example, the wave spectrum is chosen to achieve the highest difference in a reflection, transmission or emission reaction between the through hole 28 and the hole 30. This difference is based on differences in the material properties of the through hole 28 and the hole 30.

In an example, the sensor 48 is a photo detector, a CCD chip, a laser detector.

As an advantage, a faster and more distinct determination of the geometrical relation of a through hole and a hole results.

In an example of Fig. 3, the measuring unit 18 comprises a radiation source 50 configured to generate electromagnetic radiation to be reflected by surfaces of the component 12 and the support structure 14.

In an alternative solution, an external source is provided, like ambient light, as the source for the electromagnetic radiation to be detected by the sensor 48, not shown in Fig. 3.

In an option, the radiation source 50 is applied from outside the through hole 28 for contactless scanning of the inner surfaces of through hole 28 and the hole 30 not shown in Fig. 3.

In an example, besides electromagnetic radiation reflected by surfaces, transmission and emission are measured.

In an example, the radiation source 50 is configured to emit matter waves, like, e.g., ultrasonic sound waves and the sensor 48 is an ultrasonic sound wave detector, not shown in Fig. 3.

In an example, the radiation source 50 can be sunlight or a diode.

In an example, for electromagnetic detection, the measuring unit 18 further comprises a scanning aid element, not shown in Fig. 3. The scanning aid element enhances the sensing signal of the sensor 48.

In an example, the scanning aid element comprises a collimator, fluorescence dye or a radiation source 50 at a probe configured for insertion in the hole 30, not shown in Fig. 3.

As an advantage, differences in the materials of the through hole 28 and the hole 30 are exploited to determine their geometrical relation in a more precise manner.

Fig. 4 schematically shows a general scheme of an example of an excentre-orienting device for adjusting an excentre-based compensator 33, not shown in Fig. 4. The excentre-orienting device 100 comprises a value display 102 and an excentre-receiving unit 104. The excentre-receiving unit 104 is configured to rotatively hold the excentre-based compensator 33. The value display 102 is configured to indicate a current rotative adjustment value, shown by arrow 106 in Fig. 4, of the excentre-based compensator 33 inserted into the excentre-receiving unit 104.

The term "excentre-orienting device" relates to an assembling unit for the excentre-based compensator 33.

The term "value display" relates to a unit that can optically show a value to an operator of the excentre-orienting device 100, as shown in Fig. 4.

The term "excentre-receiving unit" relates to a site that can accept an excentre element or a double excentre and secure it against gravitational forces.

In an example, the excentre-receiving unit 104 is configured for forming a double-excentre bush 33 with the first and the second excentre bushes encircling a fixation element through hole.

In an example, the current rotative adjustment value is configured to reproduce a position of the hole 30 in the through hole 28 at the fastening site 32, not shown in Fig. 4, with a fixation element through hole position in the double excentre bush.

The term "rotatively hold" relates to a feature of the excentre-receiving unit 104 in securing the orientation of an excentre element or the double-excentre 33 against arbitrary gravitational forces while allowing the application of adjustment forces on the orientation of the excentre elements or the double-excentre 33.

The term "current rotative adjustment value" relates to a distinct value in, e.g., degrees, that describes the current rotational position of the excentre elements in the double excentre and the position of the resulting fixation element through hole.

In an example, the current adjustment value is referred to as the current setting of the double-excentre 33.

As an advantage, a more precise adjustment of the double-excentre 33 results.

In an example not shown in Fig. 4, the excentre-receiving unit 104 comprises an excentre drive configured to actively rotate at least one excentre element of the excentre-based compensator 33. The excentre drive comprises a data input for receiving a target value from an output 20 of a measuring device 10 for rotatively adjusting the excentre-based compensator 33 to the received target value.

The term "excentre drive" relates to a unit that allows for automatic rotation of the excentre elements.

The term "data input" relates to an interface that transfers the target value into an amount of energy to rotate the excentre elements or the double-excentre 33 to a certain orientation corresponding to the target value.

In an example, the excentre drive is connected to a mobile device, like a mobile phone.

In an example not shown in Fig. 4, the value display 102 is configured for determining a current type or model of an excentre-based compensator 33 inserted into the excentre-receiving unit 104.

In an example, the excentre elements vary by size, height, by the diameter of their fixation element through hole, a location of a center of the fixation element through hole with respect to the excentre-element cross-section.

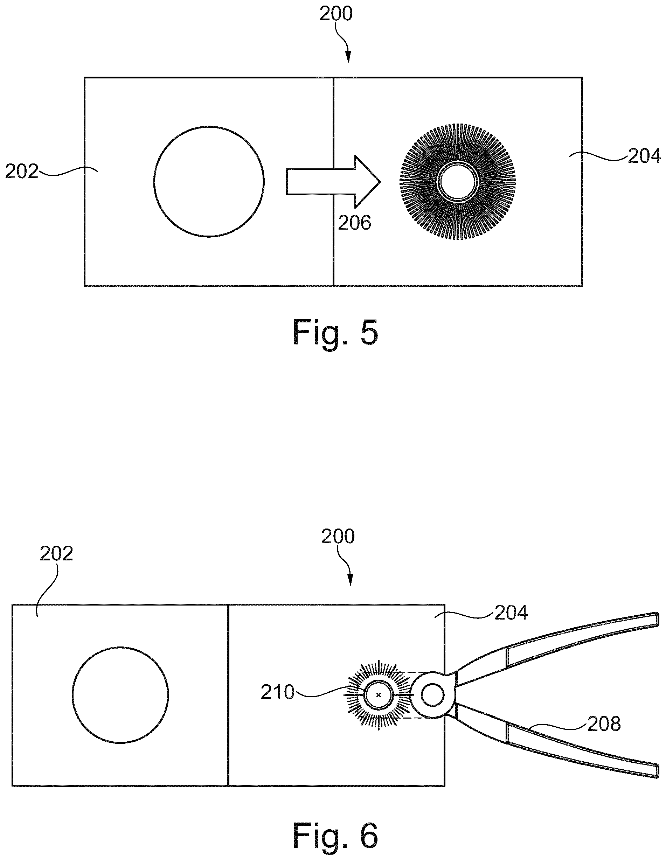

Fig. 5 schematically shows a general scheme of an example of a system 200 for adjusting an excentre-based compensator 33, not shown in Fig. 5. The system 200 comprises a measuring device 202 according to one of the previous examples and an excentre-orienting device 204 according to one of the previous examples. The measuring device 202 is connected to the excentre-orienting device 204 to transfer, shown by arrow 206 in Fig. 5, a measured value to the excentre-orienting device 204.

The term "transfer" relates to the transfer of data but also to the transfer of mechanical force.

In an example, the measuring device 202 and the excentre-orienting device 204 are connected to yield a single-pieced instrument, as is also shown in Fig. 5. The connection between the measuring device 202 and the excentre-orienting device 204 is configured, such that the measurement of the measuring device 202 is transferred directly by mechanical motion to the excentre-orienting device 204. The excentre-orienting device 204 is configured such that the mechanical motion adjusts a double-excentre bushing rotatively held by the excentre-orienting device 204.

In an example, the mechanical motion of the measuring directly adjusts the double-excentre bushing in Fig. 5.

In an example, an excentre-receiving unit of the excentre-orienting device 204 is configured to rotatively hold a double-excentre bushing and configured to rotate the excentre-elements of the double-excentre bushing via the mechanical motion of the measuring unit 18 in Fig. 5.

In an example, a first end face of the system 200 is configured for measuring the fastening site 32 with the measuring device 202 and the system 200 is configured to transfer the measuring via mechanical motion to the second end face of the system 200. The second end face is configured to adjust the double-excentre bushing by the mechanical motion. The system 200 is configured for aligning the second end face with the fastening site 32, during rotation of the system 200 at the fastening site 32, e.g., by 180°, and then to insert the adjusted the double-excentre bushing into the through hole 28, not shown in Fig. 5.

In an example, the system is configured as a transport unit for the adjusted double-excentre bushing to the fastening site.

In another example, the measuring device 202 is connected to the excentre-orienting device 204 by a cable or a wireless connection in order to transfer data of a measuring from the measuring device 202 to the excentre-orienting device 204, not shown in Fig. 5.

In an example, not shown in Fig. 5, the measuring device 202 and the excentre-orienting device 204 are configured to form a system 200 while being separated.

In an example, not shown in Fig. 5, the measuring device 202 and the excentre-orienting device 204 are connected via a wireless data transfer.

As an advantage, the process of measuring and adjustment of the double-excentre can be carried out directly all-in-one at the fastening site.

Fig. 6 schematically shows a general scheme of another example of a system 200 for adjusting an excentre-based compensator 33, not shown in Fig. 6. The system 200 further comprises a pick-up unit 208 and a transport unit interface 210. The pick-up unit 208 is associated with the transport unit interface 210. The pick-up unit 208 is configured for an uptake of an excentre-based compensator bushing 33 from the excentre-orienting device 204. The pick-up unit 208 is configured to keep the excentre-based compensator bushing 33 in a fixed orientation in relation to the pick-up unit 208. The pick-up unit 208 is configured for a transfer of the excentre-based compensator bushing 33 to the fastening site 32, not shown in Fig. 6. The pick-up unit 208 comprises a transport interface configured to abut on a component 12 or a support structure 14, both not shown in Fig. 6, in order to release the excentre-based compensator bushing 33 in a predetermined orientation to the fastening site 32 such that the excentre-based compensator bushing 33 can be inserted into a through hole 28, wherein a fixation element through hole of the excentre-based compensator bushing 33 aligns with a hole 30 of the support structure 14.

The term "pick-up unit" relates to a site that can take up excentre elements or the double-excentre and while taking them up, fix them in their distinct orientation and afterwards release them in their distinct orientation.

The term "transport unit interface" relates to, i.e., handles of pliers.

The term "transport interface configured to abut on the component" relates to a marking, indicator element, or any other design of the transport interface that links the spatial orientation of the centre of the fixation element through hole in the pick-up unit 208 to the orientation of the hole 30 in the support structure 14.

The excentre-based compensator bushing 33 can also be referred to as double-excentre 33 or double-excentre bush 33 or double-excentre bushing 33.

The bushing can also be referred to as bush.

As an advantage, the process of compensating for tolerances at a fastening site with double-excentre bushings 33 can be automatized and accelerated.

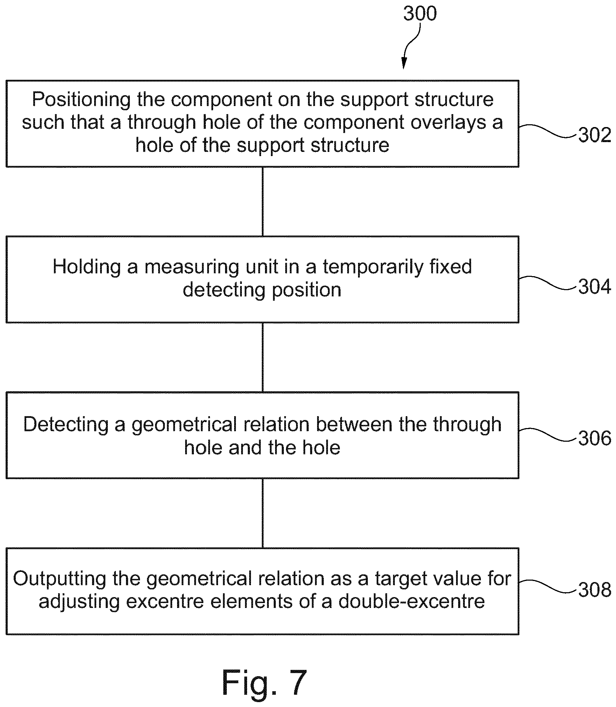

Fig. 7 shows basic steps of an example of a method 300 for measuring a fastening site 32 of a component 12 to a support structure 14. The method 300 comprises the following steps, with reference to Fig. 1:
- In a first step 302 the component 12 is positioned on the support structure 14 such that a through hole 28 of the component 12 overlays a hole 30 of the support structure 14,
- In an second step 304 a measuring unit 18 is held at a temporarily fixed detecting position 22,
- In a third step 306 a geometrical relation 26 between the through hole 28 and the hole 30 is detected, and
- In a fourth step 308 the geometrical relation 26 is outputted as a target value for adjusting at least one excentre element of an excentre-based compensator 33.

In an example, "for adjusting excentre elements of a double-excentre 33" means for adjusting at least one excentre element of an excentre-based compensator 33.

In an example, the method 300 further comprises the following steps:
- Rotatively holding the excentre-based compensator 33,
- Receiving the target value from the measuring of the fastening site 32,
- Rotatively adjusting the excentre-based compensator 33 to a predetermined setting according to the value; and
- Optionally, transporting, with a transfer unit, the excentre-based compensator 33 to the fastening site 32.

It has to be noted that embodiments of the invention are described with reference to different subject matters. In particular, some embodiments are described with reference to method type claims whereas other embodiments are described with reference to the device type claims. However, a person skilled in the art will gather from the above and the following description that, unless otherwise notified, in addition to any combination of features belonging to one type of subject matter also any combination between features relating to different subject matters is considered to be disclosed with this application. However, all features can be combined providing synergetic effects that are more than the simple summation of the features.

While the invention has been illustrated and described in detail in the drawings and foregoing description, such illustration and description are to be considered illustrative or exemplary and not restrictive. The invention is not limited to the disclosed embodiments. Other variations to the disclosed embodiments can be understood and effected by those skilled in the art in practicing a claimed invention, from a study of the drawings, the disclosure, and the dependent claims.

In the claims, the word "comprising" does not exclude other elements or steps, and the indefinite article "a" or "an" does not exclude a plurality. A single processor or other unit may fulfil the functions of several items re-cited in the claims. The mere fact that certain measures are re-cited in mutually different dependent claims does not indicate that a combination of these measures cannot be used to advantage. Any reference signs in the claims should not be construed as limiting the scope.

## Claims

1. A measuring device (10) for fastening a component (12) to a support structure (14), the measuring device comprising:
- an alignment unit (16);
- a measuring unit (18); and
- an output (20);
wherein the alignment unit is configured to hold the measuring unit in a temporarily fixed detecting position (22) in relation to the component;
wherein the measuring unit is configured to detect a geometrical relation (26) between a through hole (28) of the component overlayed to a hole (30) of the support structure, both forming a fastening site (32); and
wherein the output is configured to output the geometrical relation as a target value for adjusting at least one excentre element of an excentre-based compensator (33) configured for insertion into the through hole of the component and for receiving a fixation element for fastening the component to the support structure.

2. Device according to claim 1, wherein the measuring unit is configured for detecting the fastening site by mechanical sensing.

3. Device according to claim 1 or 2, wherein for the mechanical sensing, the measuring unit comprises a probing rod (34) with a probe head (36);
wherein the probe head is configured to enter the through hole and the hole; and
wherein the probe head is configured for mechanical sensing of locations (38) on inner surfaces at the fastening site.

4. Device according to claim 1, 2 or 3, wherein the probing rod is configured to act on an indicator (40) of a mechanical scale (42) during the mechanical detection to indicate a value on the scale, which value is representative of the geometrical relation.

5. Device according to one of the preceding claims, wherein the probing rod is configured to act on an electromechanical indicator (44) to generate an electric signal during the mechanical detection, which signal is representative of the geometrical relation.

6. Device according to one of the preceding claims, wherein the probing rod comprises a self-centering stick (46) and the alignment unit is configured to allow for centering of the self-centering stick at the hole; and
wherein the self-centering triggers the output of a value or signal that is representative of the geometrical relation.

7. Device according to claim 1, wherein the measuring unit is configured for detecting the fastening site via electromagnetic detection.

8. Device according to claim 7, wherein, for the electromagnetic detection, the measuring unit comprises a sensor (48) for detecting electromagnetic waves.

9. Device according to claim 7 or 8, wherein the measuring unit comprises a radiation source (50) configured to generate electromagnetic radiation to be reflected by surfaces of the component and the support structure.

10. An excentre-orienting device (100) for adjusting an excentre-based compensator, comprising:
- a value display (102); and
- an excentre-receiving unit (104);
wherein the excentre-receiving unit is configured to rotatively hold the excentre-based compensator; and
wherein the value display is configured to indicate a current rotative adjustment value of the excentre-based compensator inserted into the excentre-receiving unit.

11. Device according to claim 10, wherein the excentre-receiving unit comprises an excentre drive configured to actively rotate at least one excentre element of the excentre-based compensator; and
wherein the excentre drive comprises a data input for receiving a target value from an output of a measuring device for rotatively adjusting the excentre-based compensator to the received target value.

12. Device according to claim 10 or 11, wherein the value display is configured for determining a current type or model of an excentre-based compensator inserted into the excentre-receiving unit.

13. A system (200) for adjusting an excentre-based compensator at a fastening site, the system comprising:
- a measuring device (202) according to one of the claims 1 to 9; and
- an excentre-orienting device (204) according to one of the claims 10 to 12;
wherein the measuring device is connected to the excentre-orienting device to transfer a measured value to the excentre-orienting device.

14. System according to claim 13, further comprising:
- a pick-up unit (208); and
- a transport unit interface (210);
wherein the pick-up unit is associated with the transport unit interface;
wherein the pick-up unit is configured for an uptake of an excentre-based compensator bushing from the excentre-orienting device;
wherein the pick-up unit is configured to keep the excentre-based compensator bushing in a fixed orientation in relation to the pick-up unit;
wherein the pick-up unit is configured for a transfer of the excentre-based compensator bushing to the fastening site;
wherein the pick-up unit comprises a transport interface configured to abut on a component or a support structure in order to release the excentre-based compensator bushing in a predetermined orientation to the fastening site such that the excentre-based compensator bushing can be inserted into a through hole, wherein a fixation element through hole of the excentre-based compensator bushing aligns with a hole of the support structure.

15. Method (300) for measuring a fastening site of a component to a support structure, comprising the following steps:
- Positioning (302) the component on the support structure such that a through hole of the component overlays a hole of the support structure;
- Holding (304) a measuring unit in a temporarily fixed detecting position;
- Detecting (306) a geometrical relation between the through hole and the hole; and
- Outputting (308) the geometrical relation as a target value for adjusting at least one excentre element of an excentre-based compensator.
